(19) Europäisches Patentamt
European Patent Office
Office européen des brevets

(11) EP 4 571 917 A1

(12) **EUROPEAN PATENT APPLICATION**
published in accordance with Art. 153(4) EPC

(43) Date of publication:
**18.06.2025 Bulletin 2025/25**

(21) Application number: **23851398.0**

(22) Date of filing: **26.06.2023**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2023/102471**

(87) International publication number:
**WO 2024/032171 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 CN 202210946770**

(71) Applicant: **Shenzhen Capchem Technology Co., Ltd**
**Shenzhen, Guangdong 518118 (CN)**

(72) Inventors:
- **QIAN, Yunxian**
**Shenzhen, Guangdong 518118 (CN)**
- **HU, Shiguang**
**Shenzhen, Guangdong 518118 (CN)**
- **LI, Hongmei**
**Shenzhen, Guangdong 518118 (CN)**
- **XIANG, Xiaoxia**
**Shenzhen, Guangdong 518118 (CN)**

(74) Representative: **Herrero & Asociados, S.L.**
**Edificio Aqua - Agustín de Foxá, 4-10**
**28036 Madrid (ES)**

(54) **LITHIUM-ION BATTERY**

(57) To address the issue of the existing lithium-ion battery's excessive temperature rise during charging and discharging, the application provides a lithium-ion battery, including a positive electrode, a negative electrode, a non-aqueous electrolyte and a separator, and the separator is positioned between the positive electrode and the negative electrode; the positive electrode includes a positive electrode material layer containing a positive electrode active material, and the positive electrode active material includes a lithium cobalt oxide, and the non-aqueous electrolyte includes a non-aqueous organic solvent, a lithium salt and an additive, and the additive includes a compound represented by structural formula 1:

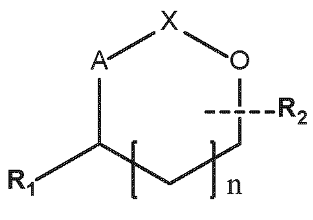

Structural formula 1

the lithium-ion battery meets the following requirements: $0.1 \leq h/q*m \leq 15$; and $10 \leq q \leq 50$, $50 \leq h \leq 130$, $0.01 \leq m \leq 3$; the lithium-ion battery's maximum surface temperature ($T_{max}$) and minimum surface temperature ($T_{min}$) during 2C discharge to 100% DOD at 25°C meet the following requirements: $(T_{max}-T_{min})/T_{min}*100\% \leq 30\%$.

EP 4 571 917 A1

## Description

## Technical field

The present application belongs to the technical field of energy storage devices, and particularly relates to a lithium-ion battery.

## Background

Lithium-ion batteries are widely used in 3C digital, power tools, aerospace, energy storage, power vehicles and other fields because of their high specific energy, no memory effect and long cycle life. With the rapid development of electronic information technology and consumer products, a higher requirement of high voltage and high energy density has been brought forward for lithium-ion batteries. Since lithium cobalt oxide (LCO) is currently the most widely used positive electrode material for 3C lithium batteries and market demand is continually growing, LCO production is increasing steadily year by year. With the industrialization of LCO with fast charge (≥2C) and high voltage (≥4.45V), LCO is promoted to a brand-new development level. However, with the advent of the 5G era, the data transmission speed and processing capacity of smart phones have been significantly improved compared with the 2G and 3G eras, and the application scenarios such as AR, high-definition video and live broadcast have been accelerated. People's requirements for mobile phone performance are getting higher and higher, which promotes the rapid iteration of mobile phone hardware configuration, especially for the charging and discharging rate and capacity of 3C digital batteries. At the same time, however, the problem of heat generation of smartphone is becoming more and more serious. Mobile phones are hot, stuck and crashed from time to time, and even lead to motherboard burning or even explosion in serious cases. Nevertheless, there are few studies on reducing the temperature rise and ensuring the uniformity of temperature distribution during the discharge of lithium-ion batteries. Generally, the uneven distribution of temperature inside the battery is related to the uneven distribution of current in the battery, which easily leads to local overcharge or overdischarge during the charge and discharge of battery, and the inconsistent speed of side reactions, which in turn leads to the inconsistent speed of internal decay of battery. In addition, reducing the temperature rise of battery during high-rate charge and discharge is also very important to improve the service life of battery. Excessive battery temperature is an urgent problem to be overcome in order to improve the performance of lithium-ion batteries.

## Summary of the invention

To address the issue of the existing lithium-ion battery's excessive temperature rise during charging and discharging, the application provides a lithium-ion battery.

The technical solutions adopted by the present application to solve the technical problems are as follows.

The present application provides a lithium-ion battery including a positive electrode, a negative electrode, a non-aqueous electrolyte and a separator, and the separator is positioned between the positive electrode and the negative electrode; the positive electrode includes a positive electrode material layer containing a positive electrode active material, and the positive electrode active material includes a lithium cobalt oxide, and the non-aqueous electrolyte includes a non-aqueous organic solvent, a lithium salt and an additive, and the additive includes a compound represented by structural formula 1:

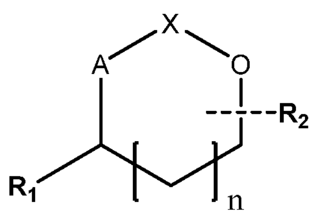

Structural formula 1

n is 0 or 1, A is selected from C or O, X is selected from

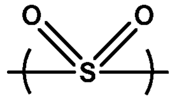 or 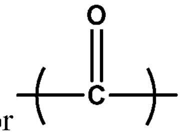,

$R_1$ and $R_2$ are independently selected from H,

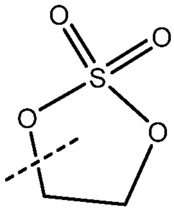, 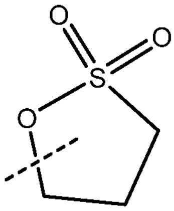, 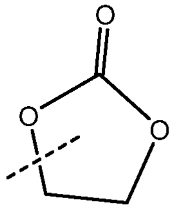, 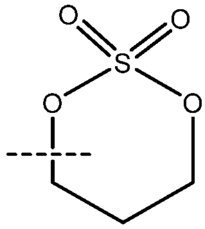

or

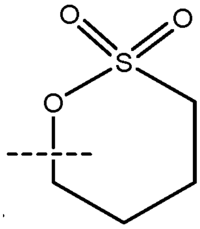,

$R_1$ and $R_2$ are not selected from H at the same time, and X, $R_1$ and $R_2$ contain at least one sulfur atom; the lithium-ion battery meets the following requirements:

$0.1 \le h/q*m \le 15$;
and $10 \le q \le 50$, $50 \le h \le 130$, $0.01 \le m \le 3$;
where q is a porosity of the separator, in %;
h is a thickness of the positive electrode material layer, in μm;
m is a percentage mass content of the compound represented by structural formula 1 in the non-aqueous electrolyte, in %;
the lithium-ion battery's maximum surface temperature ($T_{max}$) and minimum surface temperature ($T_{min}$) during 2C discharge to 100% DOD at 25°C meet the following requirements:

$$(T_{max}-T_{min})/T_{min}* 100\% \le 30\%.$$

Alternatively, the lithium-ion battery meets the following requirements:

$$0.2 \le h/q*m \le 6.$$

Alternatively, the porosity (q) of the separator is 15%-30%.

Alternatively, the thickness (h) of the positive electrode material layer is 60 μm-110 μm.

Alternatively, the percentage mass content (m) of the compound represented by structural formula 1 in the non-aqueous electrolyte is 0.1%-1.0%.

Alternatively, the compound represented by structural formula 1 is selected from at least one of the following compounds:

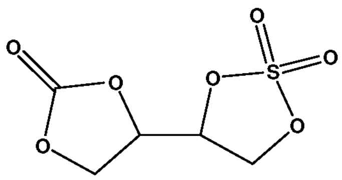

Compound 1

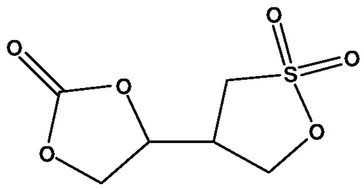

Compound 2

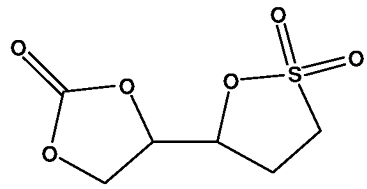

Compound 3

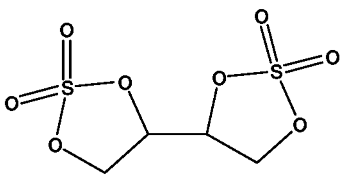

Compound 4

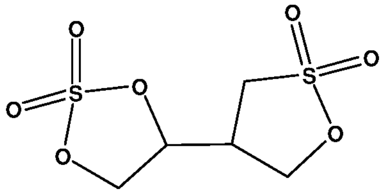

Compound 5

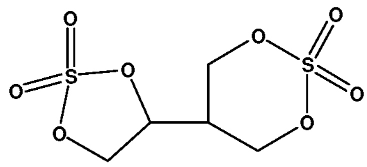

Compound 6

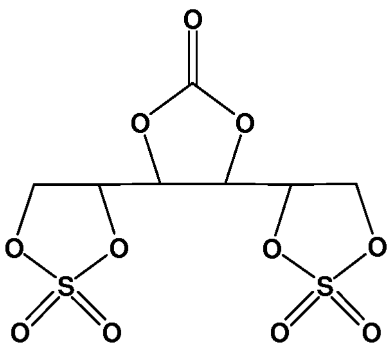

Compound 7

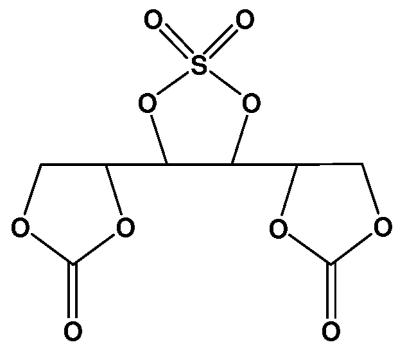

Compound 8

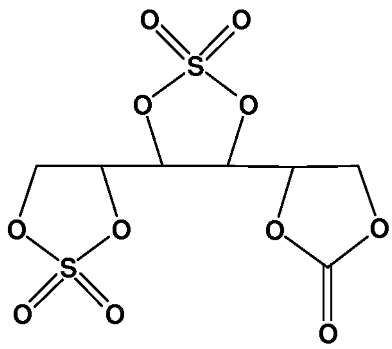

Compound 9

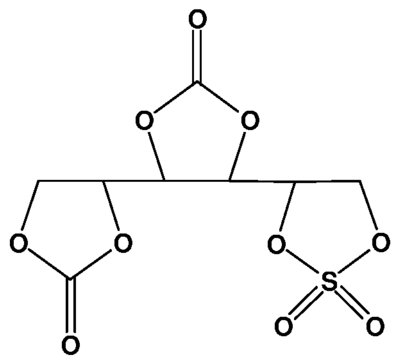

Compound 10

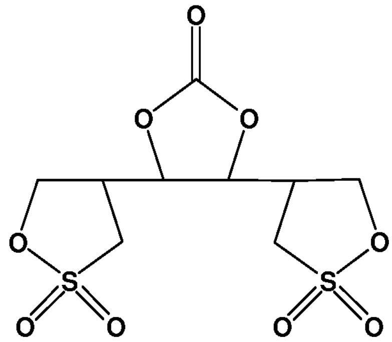

Compound 11

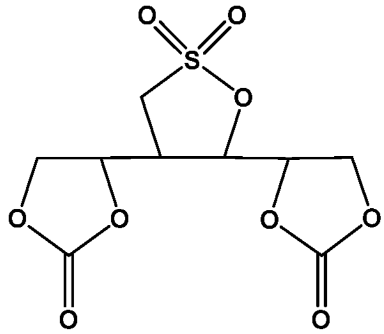

Compound 12

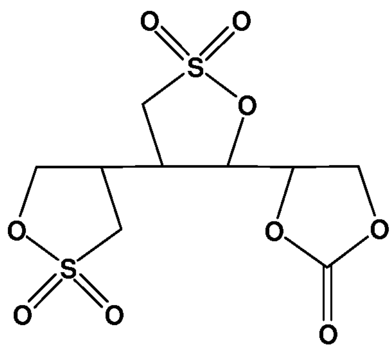

Compound 13

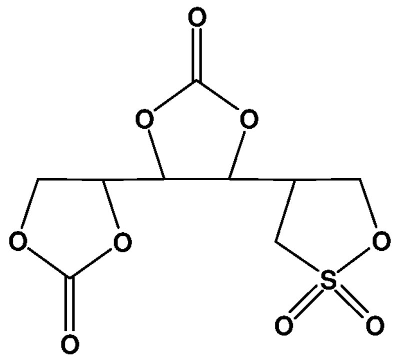

Compound 14

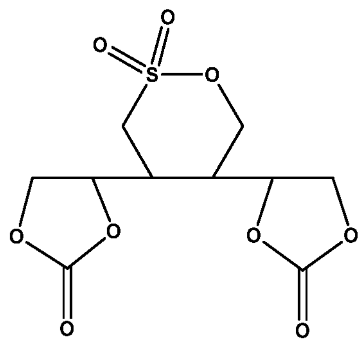

Compound 15

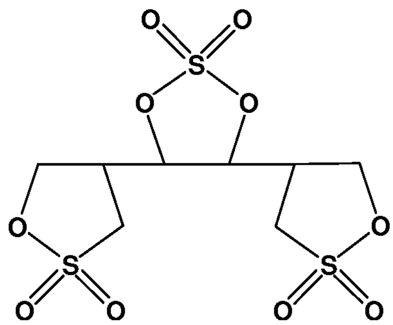

Compound 16

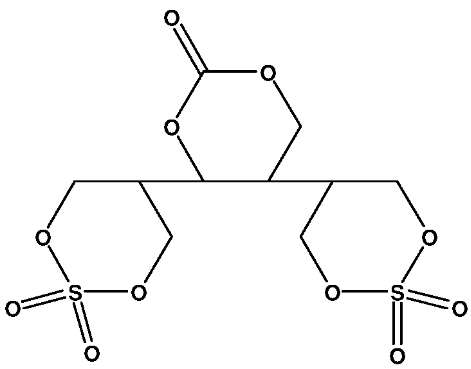

Compound 17

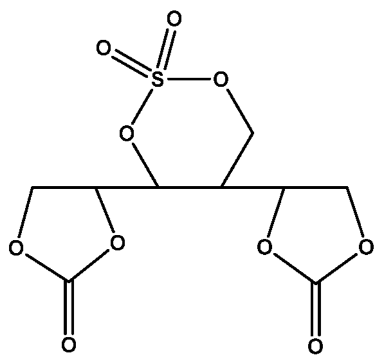

Compound 18

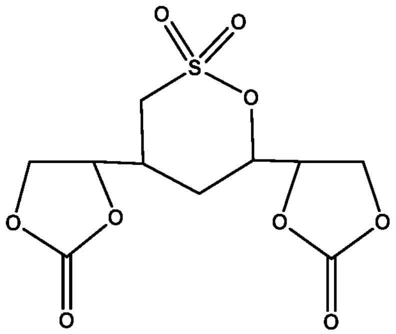

Compound 19

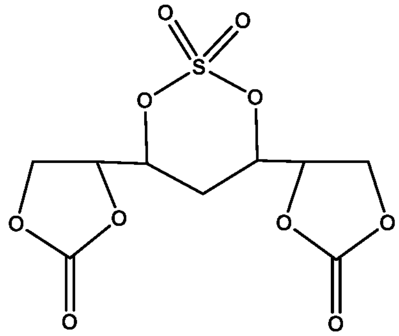

Compound 20

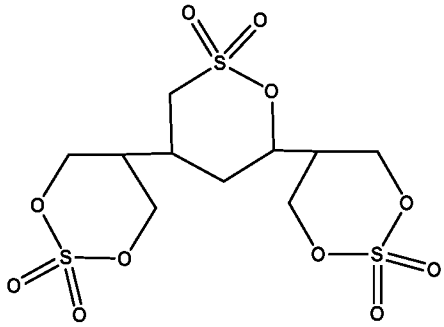

Compound 21

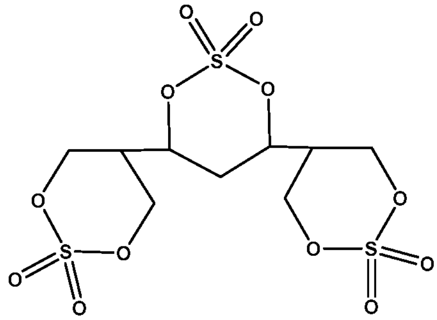

Compound 22.

Alternatively, a charging cut-off voltage of the lithium-ion battery is 4.4V to 4.7V.

Alternatively, the non-aqueous organic solvent includes at least one selected from the group consisting of ethylene carbonate, dimethyl carbonate, diethyl carbonate, ethyl methyl carbonate, propene carbonate, butyl acetate, γ-butyrolactone, propyl propionate, ethyl propionate, ethyl butyrate, methyl acetate, ethyl acetate, ethyl fluoroacetate and fluoroether.

Alternatively, the additive further includes at least one of cyclic sulfate compounds, sultone compounds, cyclic carbonate compounds, phosphate compounds, borate compounds and nitrile compounds;

an addition amount of the additive is 0.01%-30% based on the total mass of the non-aqueous electrolyte being 100%.

Alternatively, the cyclic sulfate compound is at least one selected from the group consisting of ethylene sulfate, propylene sulfate, methyl ethylene sulfate,

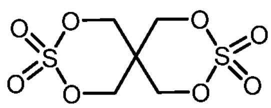

and

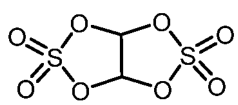

;

the sultone compound is at least one selected from the group consisting of 1,3-propane sultone, 1,4-butane sultone and 1,3- propylene sultone;

the cyclic carbonate compound is at least one selected from the group consisting of vinylene carbonate, vinylethylene carbonate, methylene ethylene carbonate, fluoroethylene carbonate, trifluoromethyl ethylene carbonate, bis-fluoroethylene carbonate or a compound represented by structural formula 2;

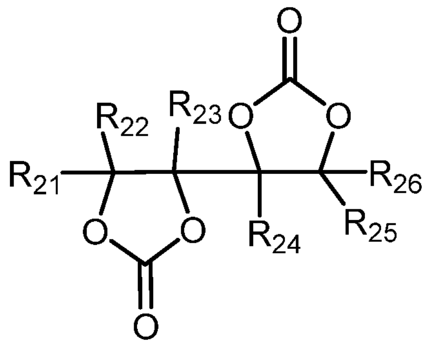

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;
the phosphate compound is at least one selected from the group consisting of tri (trimethylsilane) phosphate, tri (trimethylsilane) phosphite or a compound represented by structural formula 3:

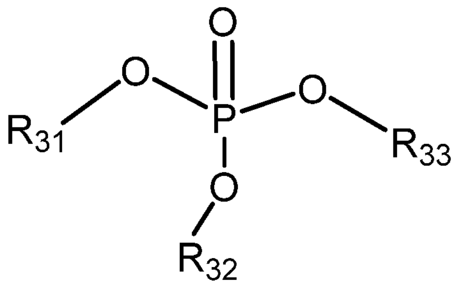

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, - $Si(C_mH_{2m+1})_3$, m is a natural number of 1-3, and at least one of $R_{31}$, $R_{32}$ and $R_{33}$ is an unsaturated hydrocarbon group;
the borate compound is at least one selected from the group consisting of tris (trimethylsilane) borate and tris (triethyl silicane) borate; and
the nitrile compound is at least one selected from the group consisting of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

According to the lithium-ion battery provided by the present application, the compound represented by structural formula 1 is added into the non-aqueous electrolyte as an additive, and the compound represented by structural formula 1 is decomposed under electrochemical conditions in the first formation process of the battery to form an interface film on the surfaces of the positive and negative electrodes. Through a lot of research, the inventors found that during the film formation process of the compound represented by structural formula 1, the content of the compound represented by structural formula 1, the porosity of the separator and the thickness of the positive electrode material layer would affect the film-forming quality of the interface film and the diffusion efficiency of lithium salt ions between positive and negative electrodes, which would further lead to temperature change of the lithium-ion battery during charging and discharging. Specifically, when the porosity (q) of the separator, the thickness (h) of the positive electrode material layer and the percentage mass content (m) of the compound represented by structural formula 1 in the non-aqueous electrolyte meet the condition of $0.1 \leq h/q*m \leq 15$, the synergistic effect among the separator, the positive electrode material layer and the compound represented by structural formula 1 can be fully exerted. A stable interface film with high ionic conductivity is formed on the surfaces of positive and negative electrodes. This improves the diffusion efficiency of lithium salt, obviously reduces the heat generation in the process of high current discharge of lithium-ion battery and improves the consistency of temperature rise at all positions of lithium-ion battery, thus ensuring long cycle life and consistent performance while enhancing safety performance.

**Detailed description of preferred embodiments**

In order to make the technical problems, technical solutions and beneficial effects of the present application more clear, the application will be further explained in detail below with reference to the drawings and embodiments. It should be understood that the specific embodiments described here are only used to illustrate the application, rather than to limit the application.

The embodiment of the present application provides a lithium-ion battery, which includes a positive electrode, a negative electrode, a non-aqueous electrolyte and a separator, and the separator is positioned between the positive electrode and the negative electrode; the positive electrode includes a positive electrode material layer containing a positive electrode active material, and the positive electrode active material includes a lithium cobalt oxide, and the non-aqueous electrolyte includes a non-aqueous organic solvent, a lithium salt and an additive, and the additive includes a compound represented by structural formula 1:

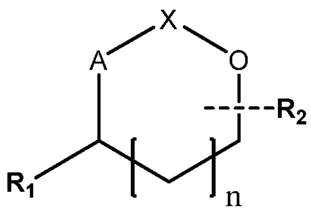

Structural formula 1

n is 0 or 1, A is selected from C or O, X is selected from

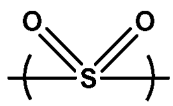 or 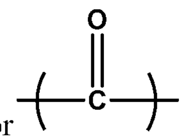,

$R_1$ and $R_2$ are independently selected from H,

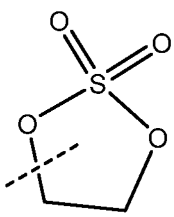, 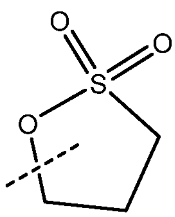, 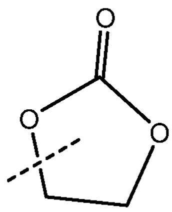, 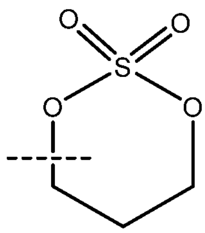

or

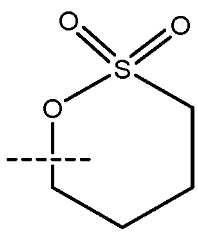,

$R_1$ and $R_2$ are not selected from H at the same time, and X, $R_1$ and $R_2$ contain at least one sulfur atom; the lithium-ion battery meets the following requirements:

$$0.1 \leq h/q*m \leq 15;$$

and

$$10 \le q \le 50,\ 50 \le h \le 130,\ 0.01 \le m \le 3;$$

where q is a porosity of the separator, in %;

h is a thickness of the positive electrode material layer, in μm;
m is a percentage mass content of the compound represented by structural formula 1 in the non-aqueous electrolyte, in %;
the lithium-ion battery's maximum surface temperature ($T_{max}$) and minimum surface temperature ($T_{min}$) during 2C discharge to 100% DOD (Depth of Discharge) at 25°C meet the following requirements:

$$(T_{max}-T_{min})/T_{min} * 100\% \le 30\%.$$

The compound represented by structural formula 1 is added into the non-aqueous electrolyte as an additive, and the compound represented by structural formula 1 is decomposed under electrochemical conditions in the first formation process of the battery to form an interface film on the surfaces of the positive and negative electrodes. Through a lot of research, the inventors found that during the film formation process of the compound represented by structural formula 1, the content of the compound represented by structural formula 1, the porosity of the separator and the thickness of the positive electrode material layer would affect the film-forming quality of the interface film and the diffusion efficiency of lithium salt ions between positive and negative electrodes, which would further lead to temperature change of the lithium-ion battery during charging and discharging. Specifically, when the porosity (q) of the separator, the thickness (h) of the positive electrode material layer and the percentage mass content (m) of the compound represented by structural formula 1 in the non-aqueous electrolyte meet the condition of $0.1 \le h/q*m \le 15$, the synergistic effect among the separator, the positive electrode material layer and the compound represented by structural formula 1 can be fully exerted. A stable interface film with high ionic conductivity is formed on the surfaces of positive and negative electrodes. This improves the diffusion efficiency of lithium salt, obviously reduces the heat generation in the process of high current discharge of lithium-ion battery and improves the consistency of temperature rise at all positions of lithium-ion battery, thus ensuring long cycle life and consistent performance while enhancing safety performance.

In some embodiments, when n is 0, the compound represented by structural formula 1 is:

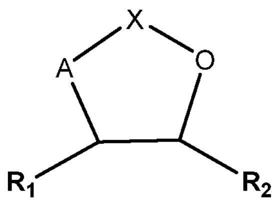;

A is selected from C or O, X is selected from

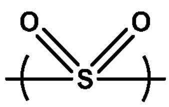 or 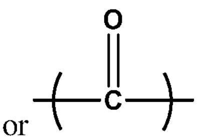,

$R_1$ and $R_2$ are independently selected from H,

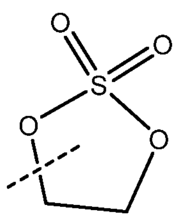, 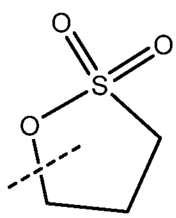, 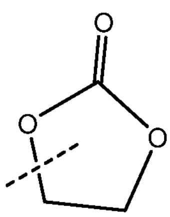, 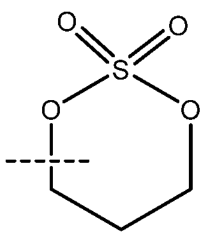

or

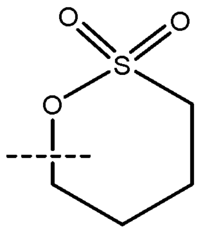
,

$R_1$ and $R_2$ are not selected from H at the same time, and X, $R_1$ and $R_2$ contain at least one sulfur atom.

In some embodiments, when n is 1, the compound represented by structural formula 1 is:

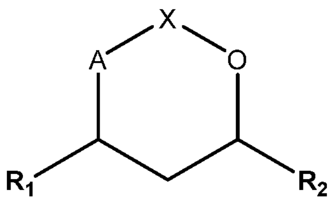 or 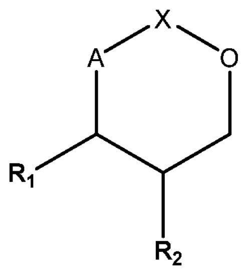 ;

A is selected from C or O, X is selected from

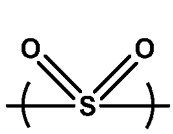 or 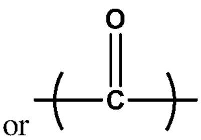 ,

$R_1$ and $R_2$ are independently selected from H,

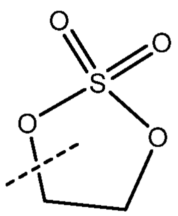 , 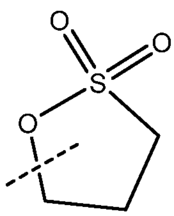 , 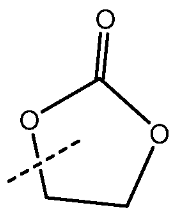 , 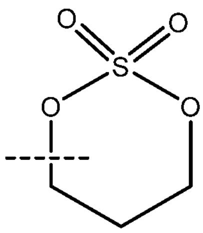

or

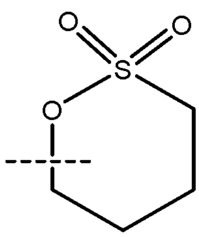
,

$R_1$ and $R_2$ are not selected from H at the same time, and X, $R_1$ and $R_2$ contain at least one sulfur atom.

In a preferred embodiment, the lithium-ion battery meets the following requirements:

$$0.2 \leq h/q*m \leq 6.$$

In a specific embodiment, the porosity (q) of the separator can be 10%, 13%, 15%, 16%, 18%, 21%, 23%, 24%, 26%, 27%, 29%, 30%, 32%, 33%, 35% and 39%.

In a preferred embodiment, the porosity (q) of the separator is 15%-30%.

If the porosity of the separator is too low, lithium-ions would not move smoothly between the separators, which will reduce the dynamic performance of lithium-ion battery and increase battery impedance. This will not only lead to the acceleration of heat generation rate and the increase of temperature rise when the battery is discharged at high current, but also lead to the worse thermal stability and worse consistency of the whole battery. If the porosity of the separator is too high, the separator would not be able to effectively block the harmful impurities moving between the positive and negative electrodes, which will deteriorate the electrochemical performance of the battery. In severe cases, the positive and negative electrodes would directly contact with each other or be easily pierced by lithium dendrites, resulting in short circuit.

In a specific embodiment, The thickness (h) of the positive electrode material layer may be 50 μm, 51 μm, 55 μm, 58 μm, 60 μm, 61 μm, 65 μm, 68 μm, 70 μm, 71 μm, 75 μm, 78 μm, 80 μm, 81 μm, 85 μm, 88 μm, 90 μm, 91 μm, 95 μm, 98 μm, 100 μm, 101 μm, 105 μm, 108 μm, 110 μm, 111 μm, 115 μm, 118 μm, 120 μm, 121 μm, 125 μm, 128 μm or 130 μm.

In a preferred embodiment, the thickness (h) of the positive electrode material layer is 60 μm - 110 μm.

Although the thicker the positive electrode material layer is, the better it is to improve the energy density of the battery, but it also greatly affects the diffusion of lithium ions in the solid phase. Therefore, there will be obvious gradient difference of lithium ion concentration in both positive electrodes and negative electrodes, which will increase the polarization phenomenon in the process of high current discharge, cause uneven temperature distribution in battery, lead to inconsistent side reaction speed, and then lead to inconsistent degradation speed in battery. This will seriously affect the consistency of the battery. However, if the positive electrode material layer is too thin, the energy density of the lithium ion battery will decrease, which is not conducive to commercial application.

In a specific embodiment, the percentage mass content (m) of the compound represented by the structural formula 1 in the non-aqueous electrolyte may be 0.01%, 0.02%, 0.05%, 0.08%, 0.1%, 0.2%, 0.4%, 0.5%, 0.7%, 0.9%, 1.0%, 1.1%, 1.3%, 1.5%, 1.8%, 2.0%, 2.3%, 2.7% or 3.0%.

In a preferred embodiment, the percentage mass content (m) of the compound represented by structural formula 1 in the non-aqueous electrolyte is 0.1%-1.0%.

When the content of the compound represented by structural formula 1 in the non-aqueous electrolyte is within the above range, it is beneficial to form a stable interface film with high ionic conductivity on the surfaces of the positive and negative electrode active materials. In this way, a fast ion channel is formed at the solid-liquid interface, which promotes the diffusion of lithium ions, significantly reduces the heat generation of lithium cobalt oxide battery during high current discharge, improves the consistency of temperature distribution, and reduces the risk of thermal runaway of the battery.

In some embodiments, the compound represented by structural formula 1 is selected from at least one of the following compounds:

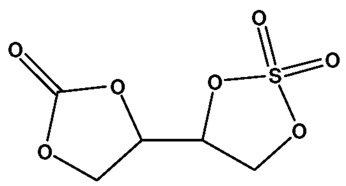

Compound 1

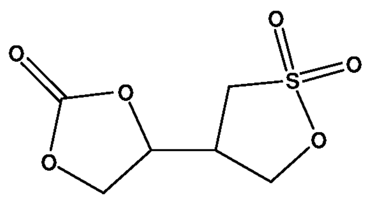

Compound 2

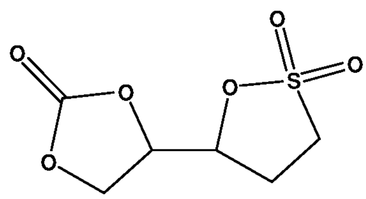

Compound 3

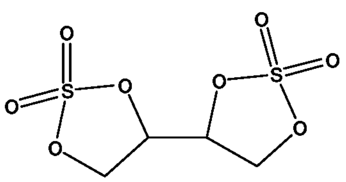

Compound 4

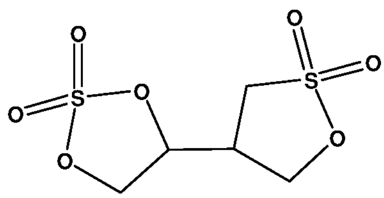

Compound 5

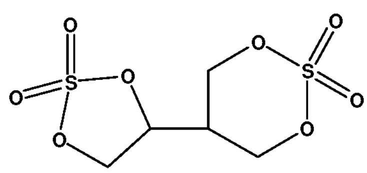

Compound 6

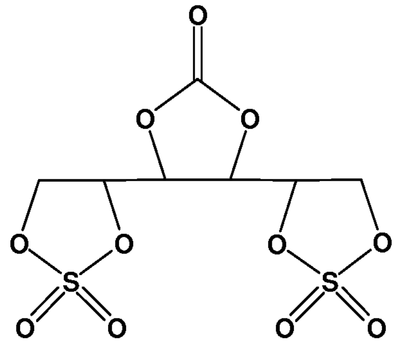

Compound 7

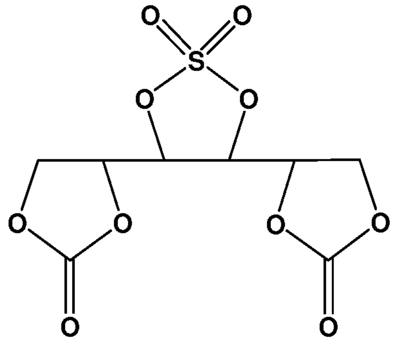

Compound 8

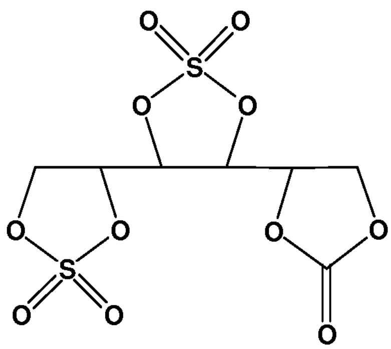

Compound 9

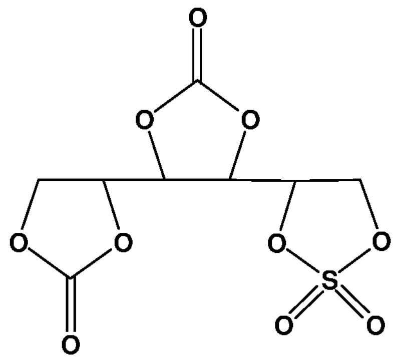

Compound 10

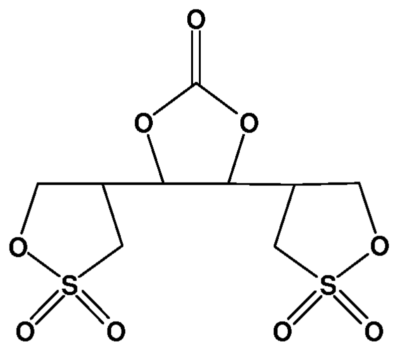

Compound 11

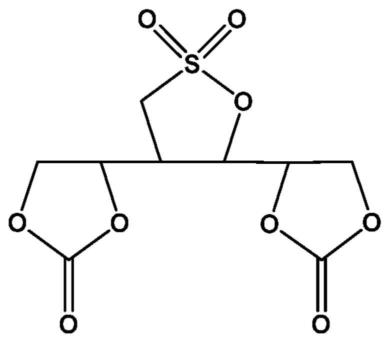

Compound 12

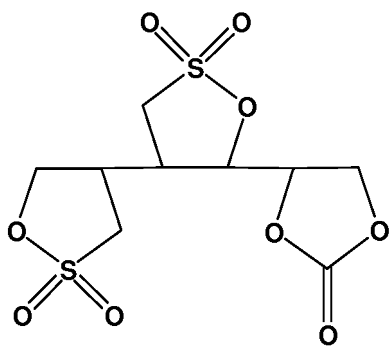

Compound 13

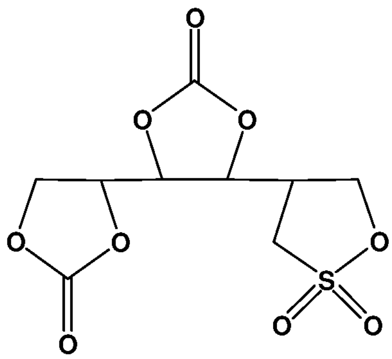

Compound 14

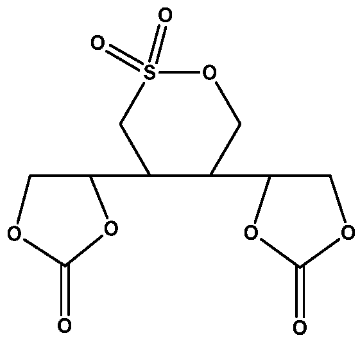

Compound 15

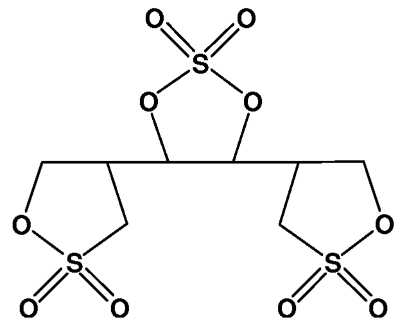

Compound 16

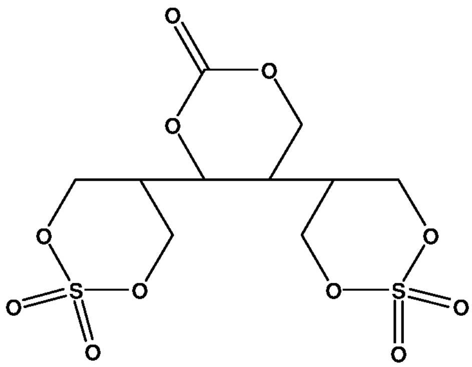

Compound 17

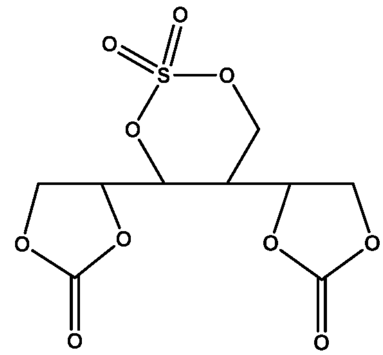

Compound 18

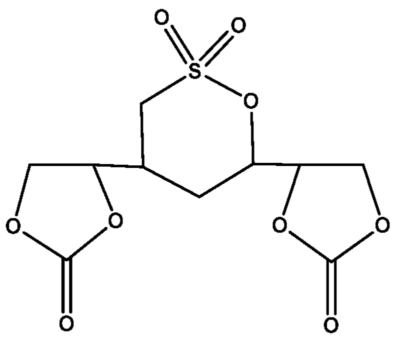

Compound 19

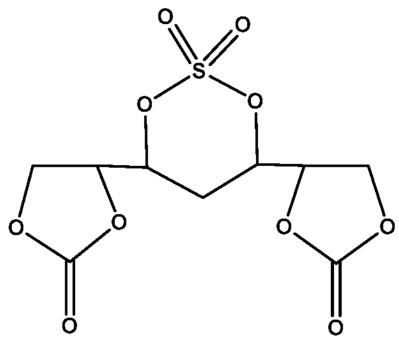

Compound 20

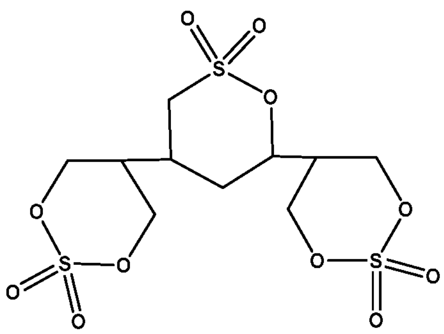

Compound 21

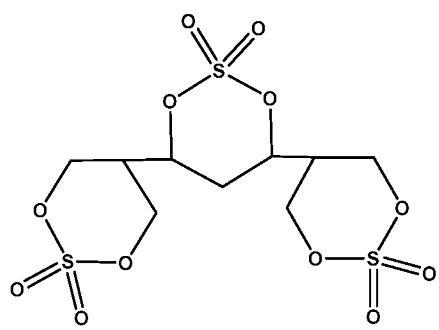

Compound 22.

It should be noted that the above are merely the preferred compounds of the present application, not the limitation of the present application.

With the structural formula of the compound represented by structural formula 1, a person skilled in the art may obtain the preparation methods of the above compounds according to the common knowledge in the chemical synthesis field. For example, compound 7 may be prepared by the following method.

Put organic solvents such as sorbitol, dimethyl carbonate, methanol alkaline catalyst potassium hydroxide and DMF into a reaction container, allow them to react for several hours under heating conditions, add a certain amount of oxalic acid to adjust the pH value to be neutral, then filter and recrystallize to obtain an intermediate product 1, and then perform esterification reaction on the intermediate product 1, carbonate, thionyl chloride and the like under high temperature conditions to obtain an intermediate product 2, and oxidize the intermediate product 2 by using an oxidant such as sodium periodate and the like to obtain a compound 7.

In some embodiments, the lithium-ion battery is a pouch battery or an ebonite battery.

In some embodiments, the lithium salt includes at least one of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, $LiSO_2F$, LiTOP (lithium oxalate phosphate), LiDODFP (lithium difluoro oxalate phosphate), LiOTFP (lithium tetrafluorooxalate phosphate) and lithium salts of lower aliphatic carboxylic acids.

In some embodiments, the concentration of the lithium salt in the non-aqueous electrolyte is 0.1mol/L-8mol/L. In a preferred embodiment, the concentration of the lithium salt in the non-aqueous electrolyte is 0.5mol/L-2.5mol/L. Specifically, the concentration of the lithium salt in the non-aqueous electrolyte may be 0.5mol/L, 1mol/L, 1.5mol/L, 2mol/L and 2.5mol/L.

In some embodiments, the positive electrode active material may further include at least one of $LiFe_{1-x'}M'_{x'}PO_4$, $LiMn_{2-y'}M_{y'}O_4$ and $LiNi_xCo_yMn_zM_{1-x-y-z}O_2$. M' is selected from at least one of Mn, Mg, Co, Ni, Cu, Zn, Al, Sn, B, Ga, Cr, Sr, V or Ti. M is selected from at least one of Fe, Co, Ni, Mn, Mg, Cu, Zn, Al, Sn, B, Ga, Cr, Sr, V or Ti, and $0 \le x' < 1$, $0 \le y' \le 1$, $0 \le y \le 1$, $0 \le x \le 1$, $0 \le z \le 1$, $x+y+z \le 1$. More preferably, the positive electrode active material also includes at least one of $LiFePO_4$, $LiFe_{0.6}Mn_{0.4}PO_4$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$, $LiNi_{0.5}Co_{0.2}Mn_{0.2}Al_{0.1}O_2$, $LiMn_2O_4$ and $LiNi_{0.8}Co_{0.1}Al_{0.1}O$.

In a preferred embodiment, the charging cut-off voltage of the lithium-ion battery is 4.4V-4.7V.

In some embodiments, the positive electrode further includes a positive electrode current collector, and the positive electrode material layer is formed on the surface of the positive electrode current collector.

In some embodiments, the positive electrode current collector is selected from metal materials that can conduct electrons. Preferably, the positive electrode current collector includes one or more of Al, Ni, tin, copper and stainless steel. In a more preferred embodiment, the positive electrode current collector is selected from aluminum foil.

In some embodiments, the positive electrode material layer further includes a positive electrode binder and a positive electrode conductive agent.

In some embodiments, the positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene and polypropylene, as well as acrylic resin, carboxymethyl cellulose sodium and styrene butadiene rubber.

The positive electrode conductive agent includes at least one of conductive carbon black, conductive carbon spheres, conductive graphite, conductive carbon fiber, carbon nanotube, graphene or reduced graphene oxide.

In some embodiments, the negative electrode includes a negative electrode material layer, and the negative electrode material layer includes a negative electrode active material.

In a preferred embodiment, the negative electrode active material includes at least one of a carbon-based negative electrode, a silicon-based negative electrode, a tin-based negative electrode and a lithium negative electrode. The carbon-based negative electrode may include graphite, hard carbon, soft carbon, graphene, mesophase carbon microspheres, etc. The silicon-based negative electrode may include silicon material, silicon oxide, silicon-carbon composite material, silicon alloy material, etc. The tin-based negative electrode may include tin, tin carbon, tin oxide and tin metal compounds. The lithium negative electrode may include metallic lithium or lithium alloy. The lithium alloy may be at least one of lithium silicon alloy, lithium sodium alloy, lithium potassium alloy, lithium aluminum alloy, lithium tin alloy and lithium indium alloy.

In some embodiments, the negative electrode material layer further includes a negative electrode binder and a negative electrode conductive agent. The negative electrode active material, the negative electrode binder and the negative electrode conductive agent are blended to obtain the negative electrode material layer.

The possible ranges of the negative electrode binder and the negative electrode conductive agent are the same as those of the positive electrode binder and the positive electrode conductive agent respectively, and the details are not repeated here.

In some embodiments, the negative electrode further includes a negative electrode current collector, and the

negative electrode material layer is formed on the surface of the negative electrode current collector.

The negative electrode current collector is selected from metal materials that can conduct electrons. Preferably, the negative electrode current collector includes one or more of Al, Ni, tin, copper and stainless steel. In a more preferred embodiment, the negative electrode current collector is selected from copper foil.

In some embodiments, the non-aqueous organic solvent includes one or more of ether solvent, nitrile solvent, carbonate solvent and carboxylic ester solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium-ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium-ion battery of the present application. In the non-aqueous solvent volume ratio of 100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium-ion dissociation degree and the decrease of viscosity of chain ether. In addition, when the negative electrode active material is a carbon material, the co-intercalation reaction of the chain ether and lithium-ions can be suppressed, so that the input-output characteristics and the charge-discharge rate characteristics can be within an appropriate range.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), γ-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium-ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the chain carbonate only needs to be in the above range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

Carboxylic acid solvent includes cyclic carboxylic ester and/or chain carbonic ester. Examples of cyclic carboxylic ester include one or more of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain

sulfones, it is usually a compound with 2-6 carbon atoms, preferably 2-5 carbon atoms. The addition amount of the sulfone solvent is not particularly limited, which is within the range of not significantly damaging the effect of the lithium-ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the non-aqueou electrolyte with excellent high-temperature storage stability is easily to be obtained.

In a preferred embodiment, the non-aqueou solvent is a mixture of cyclic carbonic ester and chain carbonic ester.

In some embodiments, the additive further includes at least one of cyclic sulfate compounds, sultone compounds, cyclic carbonate compounds, phosphate compounds, borate compounds and nitrile compounds;

Preferably, the content of the additive is 0.01%-30% based on the total mass of the non-aqueous electrolyte being 100%.

In some embodiments, the cyclic sulfate compound is at least one selected from the group consisting of ethylene sulfate, propylene sulfate, methyl ethylene sulfate,

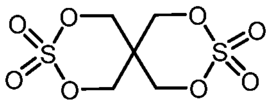

and

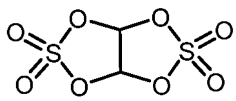

;

the sultone compound is at least one selected from the group consisting of 1,3-propane sultone, 1,4-butane sultone and 1,3- propylene sultone;

the cyclic carbonate compound is selected from at least one of vinylene carbonate, vinylethylene carbonate, methylene ethylene carbonate, fluoroethylene carbonate, trifluoromethyl ethylene carbonate, bis-fluoroethylene carbonate or a compound represented by structural formula 2,

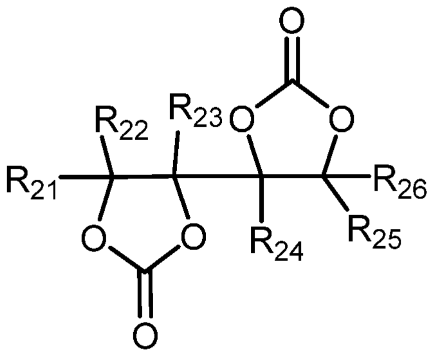

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is selected from at least one of tri (trimethylsilane) phosphate, tri (trimethylsilane) phosphite or a compound represented by structural formula 3:

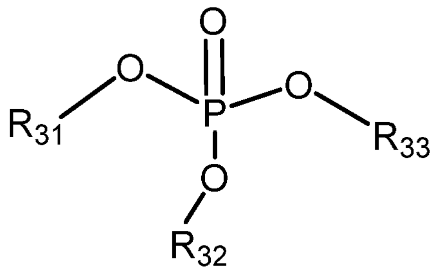

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, - $Si(C_mH_{2m+1})_3$, m is a natural number of 1-3, and at least one of $R_{31}$, $R_{32}$ and $R_{33}$ is an unsaturated hydrocarbon group.

In a preferred embodiment, the phosphate compound represented by structural formula 3 may be at least one selected from the group consisting of phosphoric acid tripropargyl ester, dipropargyl methyl phosphonate, dipropargyl ethyl phosphate, dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl hexafluoroisopropyl phosphate;

the borate compound is selected from at least one of tris (trimethylsilane) borate and tris (triethyl silicane) borate; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the additive may also include other additives that can improve the performance of the battery. For example, additives that can improve the safety performance of the battery, flame retardant additives such as fluorophosphate and cyclophosphazene, or overcharge prevention additives such as tert.-amylbenzene and tert-butyl benzene.

It should be noted that, unless otherwise specified, in general, the content of any optional substance for the additive in the non-aqueous electrolyte is less than 10%, preferably 0.1-5%, and more preferably 0.1%-2%. Specifically, the content of any optional substance fro the additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the additive is selected from fluoroethylene carbonate, the content of the fluoroethylene carbonate is 0.05%-30% based on the total mass of the non-aqueous electrolyte being 100%.

The present application will be further illustrated with embodiments and examples.

The compounds mentioned in the following embodiments and comparative examples are shown in the following Table.

Table 1

| | | |
|---|---|---|
| 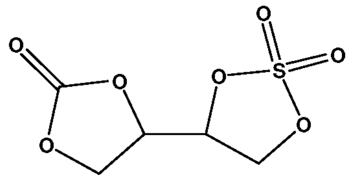 | 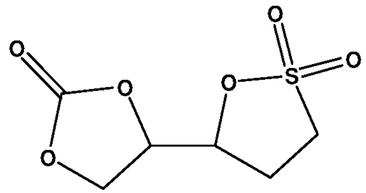 | 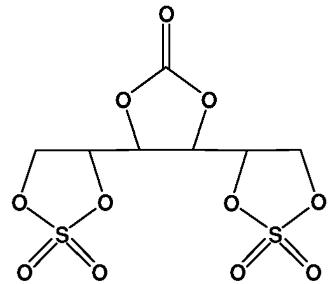 |
| Compound 1 | Compound 3 | Compound 7 |
| 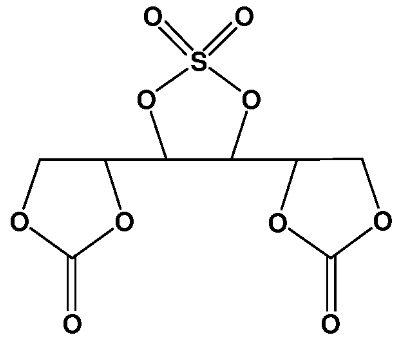 | 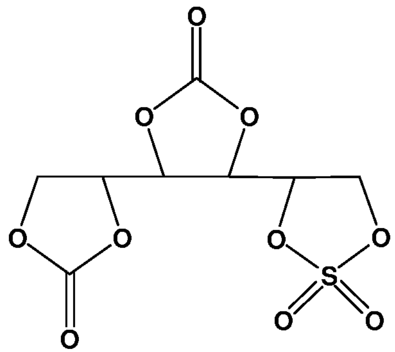 | 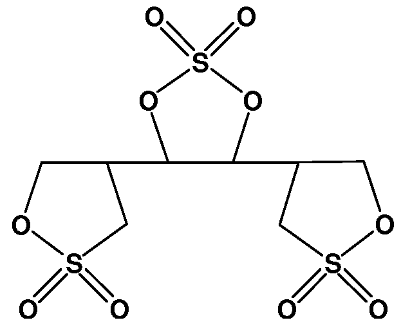 |
| Compound 8 | Compound 10 | Compound 16 |

Table 2 Parameter Design of Embodiments and Comparative examples

| Examples/Comparative Examples | Types of positive electrode active materials | Types of negative electrode active materials | Thickness (h) of the positive electrode material layer /um | Porosity (q) of the separator /% | Non-aqueous electrolyte | | | h/q*m |
|---|---|---|---|---|---|---|---|---|
| | | | | | Compound represented by structural formula 1 | Percentage mass content (m) of the compound represented by structural formula 1 /% | Other additives and their contents /% | |
| Embodiment 1 | $LiCoO_2$ | Graphite | 80 | 20 | Compound 7 | 0.5 | / | 2.00 |
| Embodiment 2 | $LiCoO_2$ | Graphite | 70 | 15 | Compound 7 | 0.1 | / | 0.47 |
| Embodiment 3 | $LiCoO_2$ | Graphite | 50 | 20 | Compound 7 | 2.5 | / | 6.25 |
| Embodiment 4 | $LiCoO_2$ | Graphite | 120 | 35 | Compound 7 | 2 | / | 6.86 |
| Embodiment 5 | $LiCoO_2$ | Graphite | 100 | 20 | Compound 7 | 1 | / | 5.00 |
| Embodiment 6 | $LiCoO_2$ | Graphite | 90 | 25 | Compound 7 | 0.2 | / | 0.72 |
| Embodiment 7 | $LiCoO_2$ | Graphite | 110 | 15 | Compound 7 | 1.2 | / | 8.80 |
| Embodiment 8 | $LiCoO_2$ | Graphite | 110 | 20 | Compound 7 | 2 | / | 11.00 |
| Embodiment 9 | $LiCoO_2$ | Graphite | 80 | 20 | Compound 7 | 2 | / | 8.00 |
| Embodiment 10 | $LiCoO_2$ | Graphite | 100 | 10 | Compound 7 | 1.5 | / | 15.00 |
| Embodiment 11 | $LiCoO_2$ | Graphite | 110 | 50 | Compound 7 | 3 | / | 6.60 |
| Embodiment 12 | $LiCoO_2$ | Graphite | 130 | 13 | Compound 7 | 0.01 | / | 0.10 |
| Embodiment 13 | $LiCoO_2$ | Graphite | 14 | 40 | Compound 7 | 2.5 | / | 0.88 |
| Embodiment 14 | $LiCoO_2$ | Graphite | 60 | 18 | Compound 7 | 0.8 | / | 2.67 |
| Embodiment 15 | $LiCoO_2$ | Graphite | 80 | 20 | Compound 7 | 0.5 | FEC: 5 | 2.00 |
| Embodiment 16 | $LiCoO_2$ | Graphite | 80 | 20 | Compound 7 | 0.5 | HTCN: 2 | 2.00 |
| Embodiment 17 | $LiCoO_2$ | Graphite | 80 | 20 | Compound 7 | 0.5 | LiODFB: 0.5 | 2.00 |
| Embodiment 18 | $LiCoO_2$ | Graphite | 80 | 20 | Compound 1 | 0.5 | / | 2.00 |
| Embodiment 19 | $LiCoO_2$ | Graphite | 80 | 20 | Compound 3 | 0.5 | / | 2.00 |
| Embodiment 20 | $LiCoO_2$ | Graphite | 80 | 20 | Compound 8 | 0.5 | / | 2.00 |
| Embodiment 21 | $LiCoO_2$ | Graphite | 80 | 20 | Compound 10 | 0.5 | / | 2.00 |
| Embodiment 22 | $LiCoO_2$ | Graphite | 80 | 20 | Compound 16 | 0.5 | / | 2.00 |

(continued)

| Examples/Comparative Examples | Types of positive electrode active materials | Types of negative electrode active materials | Thickness (h) of the positive electrode material layer /um | Porosity (q) of the separator /% | Non-aqueous electrolyte | | | h/q*m |
|---|---|---|---|---|---|---|---|---|
| | | | | | Compound represented by structural formula 1 | Percentage mass content (m) of the compound represented by structural formula 1 /% | Other additives and their contents /% | |
| Embodiment 23 | $LiCoO_2$ | Graphite and $SiO_2$ are mixed in a mass ratio of 9: 1 | 80 | 20 | Compound 7 | 0.5 | / | 2.00 |
| Embodiment 24 | $LiCoO_2$ | Graphite and $SiO_2$ are mixed in a mass ratio of 8: 2 | 80 | 20 | Compound 7 | 0.5 | / | 2.00 |
| Embodiment 25 | $LiCoO_2$ | Graphite and $SiO_2$ are mixed in a mass ratio of 7: 3 | 80 | 20 | Compound 7 | 0.5 | / | 2.00 |
| Comparative example 1 | $LiCoO_2$ | Graphite | 80 | 20 | / | / | | |
| Comparative example 2 | $LiCoO_2$ | Graphite | 80 | 20 | / | / | FEC:5 | |
| Comparative example 3 | $LiCoO_2$ | Graphite | 80 | 20 | / | / | HTCN: 2 | |
| Comparative example 4 | $LiCoO_2$ | Graphite | 80 | 20 | / | / | LiODFB: 0.5 | |
| Comparative example 5 | $LiCoO_2$ | Graphite | 45 | 20 | Compound 7 | 0.5 | | 1.13 |
| Comparative example 6 | $LiCoO_2$ | Graphite | 140 | 15 | Compound 7 | 0.5 | | 4.67 |
| Comparative example 7 | $LiCoO_2$ | Graphite | 70 | 8 | Compound 7 | 1 | | 8.75 |
| Comparative example 8 | $LiCoO_2$ | Graphite | 100 | 55 | Compound 7 | 0.5 | | 0.91 |
| Comparative example 9 | $LiCoO_2$ | Graphite | 130 | 10 | Compound 7 | 0.008 | | 0.10 |
| Comparative example 10 | $LiCoO_2$ | Graphite and $SiO_2$ are mixed in a mass ratio of 8: 2 | 80 | 20 | Compound 7 | 3.2 | | 12.80 |
| Comparative example 11 | $LiCoO_2$ | Graphite | 60 | 40 | Compound 7 | 0.05 | | 0.08 |
| Comparative example 12 | $LiCoO_2$ | Graphite | 100 | 15 | Compound 7 | 2.5 | | 16.67 |

(continued)

| Examples/Comparative Examples | Types of positive electrode active materials | Types of negative electrode active materials | Thickness (h) of the positive electrode material layer /um | Porosity (q) of the separator /% | Non-aqueous electrolyte | | | h/q*m |
|---|---|---|---|---|---|---|---|---|
| | | | | | Compound represented by structural formula 1 | Percentage mass content (m) of the compound represented by structural formula 1 /% | Other additives and their contents /% | |
| Comparative example 13 | $LiCoO_2$ | Graphite | 60 | 45 | Compound 7 | 0.01 | | 0.01 |
| Comparative example 14 | $LiCoO_2$ | Graphite | 50 | 50 | Compound 7 | 0.08 | | 0.08 |
| Comparative example 15 | $LiCoO_2$ | Graphite | 120 | 20 | Compound 7 | 3 | | 18.00 |
| Comparative example 16 | $LiCoO_2$ | Graphite | 90 | 15 | Compound 7 | 3 | | 18.00 |
| Comparative example 17 | $LiCoO_2$ | Graphite | 110 | 10 | Compound 7 | 1.5 | | 16.50 |
| Comparative example 18 | $LiCoO_2$ | Graphite | 120 | 15 | Compound 7 | 2 | | 16.00 |

Embodiment 1

This embodiment is used to illustrate the present application by taking the preparation of a lithium-ion battery as an example, including the following steps.

1) Preparation of non-aqueous electrolyte
Ethylene carbonate (EC), diethyl carbonate (DEC) and ethyl methyl carbonate (EMC) were mixed according to the mass ratio of EC: DEC: EMC = 1: 1: 1, then lithium hexafluorophosphate ($LiPF_6$) was added until the molar concentration was 1mol/L, and then compound 7 was added. The percentage mass content of compound 7 in the non-aqueous electrolyte was calculated based on the total mass of the non-aqueous electrolyte being 100%. The percentage mass content of compound 7 in the non-aqueous electrolyte is shown in Table 2.
2) Preparation of positive electrode plate
The positive electrode active materials of $LiCoO_2$, conductive carbon black Super-P and binder polyvinylidene fluoride (PVDF) were mixed according to the mass ratio of 94:3:3, and then they were dispersed in N-methyl-2-pyrrolidone (NMP) to obtain a positive electrode slurry. The slurry was evenly coated on both sides of aluminum foil, dried, calendered and vacuum-dried. A positive electrode plate was obtained by welding aluminum lead wires with an ultrasonic welder. The thickness of the vacuum-dried positive electrode material layer is shown in Table 2.
3) Preparation of negative electrode plate
The negative electrode active materials of artificial graphite, conductive carbon black Super-P, binder styrene-butadiene rubber (SBR) and carboxymethyl cellulose (CMC) were mixed according to the mass ratio of 94:1:2.5:2.5, and then they were dispersed in deionized water to obtain a negative electrode slurry. The slurry was evenly coated on both sides of copper foil, dried, calendered and vacuum-dried. A negative electrode plate was obtained by welding nickel lead wires with an ultrasonic welder, with a thickness of 120-150 μm.
4) Preparation of battery core
A three-layer separator with a thickness of 20 μm was placed between the positive electrode plate and the negative electrode plate, and the porosity of the separator was shown in Table 2. Then, the sandwich structure consisting of the positive electrode plate, negative electrode plate and separator was wound, and then the wound body was put into an aluminum foil packaging bag and baked in vacuum at 85°C for 48h to obtain a battery core to be injected with liquid.
5) Injection and formation of battery core
In a glove box with the dew point controlled below -40°C, the prepared non-aqueous electrolyte was injected into the battery core, and then it was packed and sealed in vacuum condition and let stand for 24 hours.

Then, the first charge is carried out in the following steps: formation of the first charge was performed according to the following steps: charging at 0.1C constant current for 45 min, charging at 0.2C constant current for 30 min, charging at 0.5C constant current for 75 min, sealing in vaccum condition for the second time, further charging at 0.5C constant current to 4.45V, and discharging at 0.5C constant current to 3.0 V to obtain a $LiCoO_2$/ artificial graphite lithium-ion battery.

Embodiments 2-25

Embodiments 2-34 are used to illustrate the lithium-ion battery and preparation method disclosed in the present application, including most of the steps in Embodiment 1, with the following differences:
the negative electrode active material, the thickness of the positive electrode material layer, the porosity of the separator, and the types and percentage mass content of the additive in the non-aqueous electrolyte corresponding to Embodiment 2-25 are shown in Table 2.

Comparative examples 1-18

Comparative Examples 1-18 are used to illustrate the lithium-ion battery and preparation method disclosed in the present application, including most of the steps in Embodiment 1, with the following differences:
the negative electrode active material, the thickness of the positive electrode material layer, the porosity of the separator, and the types and percentage mass content of the additive in the non-aqueous electrolyte corresponding to Comparative examples 1-18 are shown in Table 2.

Performance test

The following performance tests were conducted on the lithium-ion battery prepared above.

1. Tests of surface temperature range difference of battery under high current discharge.

The lithium-ion battery was placed in a constant temperature environment of 25°C, and discharged to 100% DOD at 2C current, the surface temperature of the lithium-ion battery was monitored by an infrared camera (model: FLIR-SC325, frame rate: 30 fps) during discharge. The maximum temperature value of the lithium-ion battery surface was recorded as $T_{max}$, and the minimum temperature value was recorded as $T_{min}$. The temperature range difference percentage was calculated as follow: Temperature range difference percentage=($T_{max}$-$T_{min}$)/$T_{min}$ * 100%.
2. Cycle performance test
The lithium-ion battery was placed in a constant temperature environment of 25°C, charged to 4.45V at 1C constant current, then charged at a constant voltage until the current dropped to 0.02C, and then discharged to 3.0 V at 2C constant current. This step was repeated for 800 times, and the discharge capacity of the first cycle and discharge capacity of the last cycle were recorded.

Calculate the capacity retention rate of the cycle according to the following formula:

$$\text{Battery capacity retention rate (\%)} = \text{last discharge capacity / first discharge capacity} \times 100\%.$$

(1) Test results obtained from Embodiments 1-14 and Comparative examples 1, 5-18 are shown in Table 3.

Table 3

| Embodiment /Comparative example | Maximum surface temperature of battery /Tmax | Minimum surface temperature of battery /$T_{min}$ | Temperatu re range difference of battery surface /% | Capacity retention rate after 800 cycles at 25°C, 1C/2C /% |
|---|---|---|---|---|
| Embodiment 1 | 31.3 | 26.4 | 18.6 | 87.3 |
| Embodiment 2 | 32.0 | 26.6 | 20.3 | 86.6 |
| Embodiment 3 | 34.5 | 27.7 | 24.5 | 84.3 |
| Embodiment 4 | 35.2 | 27.9 | 26.2 | 83.5 |
| Embodiment 5 | 32.7 | 26.8 | 22.0 | 85.8 |
| Embodiment 6 | 31.8 | 26.5 | 20.0 | 86.9 |
| Embodiment 7 | 35.8 | 28.1 | 27.4 | 82.9 |
| Embodiment 8 | 36.2 | 28.3 | 27.9 | 82.5 |
| Embodiment 9 | 35.5 | 28 | 26.8 | 83.3 |
| Embodiment 10 | 36.6 | 28.5 | 28.4 | 82.1 |
| Embodiment 11 | 35.1 | 27.9 | 25.8 | 83.7 |
| Embodiment 12 | 37.0 | 28.6 | 29.4 | 81.8 |
| Embodiment 13 | 34.8 | 27.8 | 25.2 | 84.0 |
| Embodiment 14 | 32.3 | 26.6 | 21.4 | 86.2 |
| Comparative example 1 | 45.9 | 32.1 | 43.0 | 68 |
| Comparative example 5 | 40.3 | 30.2 | 33.6 | 77.5 |
| Comparative example 6 | 40.7 | 30.3 | 34.3 | 77 |
| Comparative example 7 | 41 | 30.5 | 34.4 | 76.6 |
| Comparative example 8 | 41.4 | 30.7 | 34.9 | 76.1 |
| Comparative example 9 | 40 | 30 | 33.3 | 77.9 |
| Comparative example 10 | 43.8 | 31.7 | 38.2 | 72.2 |
| Comparative example 11 | 39.9 | 30 | 33.0 | 78.8 |
| Comparative example 12 | 41.4 | 30.8 | 34.4 | 76.6 |
| Comparative example 13 | 42.7 | 31.3 | 36.4 | 75.2 |

(continued)

| Embodiment /Comparative example | Maximum surface temperature of battery /Tmax | Minimum surface temperature of battery /$T_{min}$ | Temperatu re range difference of battery surface /% | Capacity retention rate after 800 cycles at 25°C, 1C/2C /% |
|---|---|---|---|---|
| Comparative example 14 | 40.3 | 30.2 | 33.4 | 78.4 |
| Comparative example 15 | 41.9 | 31 | 35.2 | 76 |
| Comparative example 16 | 42.1 | 31.1 | 35.4 | 75.8 |
| Comparative example 17 | 41 | 30.6 | 34.0 | 77.2 |
| Comparative example 18 | 40.6 | 30.4 | 33.6 | 77.8 |

From the test results of Embodiments 1-14 and Comparative examples 1, 5-18, it can be seen that for a battery system that adopts a lithium cobalt oxide as positive electrode active material, with addition of the compound represented by structural formula 1 to the non-aqueous electrolyte, when the porosity (q) of the separator, the thickness (h) of the positive electrode material layer and the percentage mass content (m) of the compound represented by structural formula 1 in the non-aqueous electrolyte meet the preset condition of $0.1 \le h/q*m \le 15$, the obtained lithium-ion battery has a lower battery surface temperature range difference and a higher cycle capacity retention rate. This indicates that the porosity (q) of the separator, the thickness (h) of the positive electrode material layer and the percentage mass content (m) of the compound represented by structural formula 1 in the non-aqueous electrolyte have great influence on the quality of the interfacial film formed by the compound represented by structural formula 1 on the surface of the positive electrode material layer, and the interfacial film obtained under the conditions defined by the above relationship has high stability. Moreover, it has good lithium-ion diffusion performance. With the adjustment of the porosity of the separator and the thickness of the positive electrode material layer, it can obviously reduce the heat generation of the lithium-ion battery in the process of high current discharge, improve the consistency of temperature rise of the lithium-ion battery at various positions, and effectively improve the cycle life and safety of the lithium-ion battery.

From the test results of Embodiments 1-14, it can be known that when the optimal condition is further satisfied, the battery surface temperature range difference of lithium-ion battery is further reduced and the cycle capacity retention rate of lithium-ion battery is improved. It is speculated that the interfacial film formed by the compound represented by structural formula 1 has better ionic conductivity at this state, thus effectively reducing the interfacial impedance of the surface of the positive electrode material layer, ensuring the ion diffusion speed and avoiding the problem of local overheating.

According to the test results of Comparative examples 5-10, if the porosity (q) of the separator, the thickness (h) of the positive electrode material layer and the percentage mass content (m) of the compound represented by structural formula 1 in the non-aqueous electrolyte meet the preset condition of $0.1 \le h/q*m \le 15$, while the value of q, h or m does not meet the range limit, then the lithium-ion battery still does not have good performance regarding overheating and capacity retention. This indicates that the value of q, h and m have strong correlation in improving the safety performance and cycle performance of lithium ion batteries. Similarly, when the value of q, h and m meets the range limit, while the value of h/q*m does not meet the above preset conditions, the problems of excessive temperature rise and decreased cycle performance of lithium-ion batteries still cannot be effectively solved.

(2) Test results obtained from Embodiments 1 and 15-17 and Comparative examples 2-4 are shown in Table 4.

Table 4

| Embodiment /Comparative example | Maximum surface temperature of battery /Tmax | Minimum surface temperature of battery /$T_{min}$ | Temperatur e range difference of battery surface /% | Capacity retention rate after 800 cycles at 25°C, 1C/2C /% |
|---|---|---|---|---|
| Embodiment 1 | 31.3 | 26.4 | 18.6 | 87.3 |
| Embodiment 15 | 29.5 | 25.6 | 15.2 | 88.7 |
| Embodiment 16 | 30.1 | 25.8 | 16.7 | 88.2 |
| Embodiment 17 | 30.5 | 26.1 | 16.9 | 87.7 |
| Comparative example 2 | 43.3 | 31.5 | 37.5 | 73.2 |
| Comparative example 3 | 43.8 | 31.7 | 38.2 | 72.8 |
| Comparative example 4 | 44.2 | 31.8 | 39.0 | 72.1 |

From the test results of Embodiments 1 and 15-17 and Comparative examples 2-4, it can be seen that using other film-forming additives to replace compound represented by structural formula 1 of this application with other film-forming additives, such as fluoroethylene carbonate (FEC), 1,3,6-hexanetricarbonitrile (HTCN) or lithium difluoro-oxalate borate (LiODFB), is not as good as the compound represented by structural formula 1 provided by the application in improving the performance of lithium ion batteries under similar conditions. This indicates that the 0.1≤h/q*m≤15 proposed by the application is only for the specific additive compound represented by structural formula 1. Meanwhile, in the battery system provided by the present application, fluoroethylene carbonate (FEC), 1,3,6-hexanetricarbonitrile (HTCN) or lithium difluoro oxalate borate (LiODFB) are additionally added, which can further reduce the battery surface temperature range and improve the cycle capacity retention rate. This indicates that the mechanism of improving the battery performance by other additives is different from that of the compound represented by structural formula 1, and they have complementary effects on film formation, thereby improving the positive electrode.

(3) Test results obtained from Embodiment 1 and Comparative examples 18-22 are shown in Table 5.

Table 5

| Embodiment /Comparative example | Maximum surface temperature of battery /Tmax | Minimum surface temperature of battery /$T_{min}$ | Temperatu re range difference of battery surface /% | Capacity retention rate after 800 cycles at 25°C, 1C/2C /% |
|---|---|---|---|---|
| Embodiment 1 | 31.3 | 26.4 | 18.6 | 87.3 |
| Embodiment 18 | 31.5 | 26.5 | 18.9 | 87.2 |
| Embodiment 19 | 31.7 | 26.6 | 19.2 | 87.0 |
| Embodiment 20 | 32.1 | 26.8 | 19.8 | 86.4 |
| Embodiment 21 | 31.8 | 26.6 | 19.5 | 86.7 |
| Embodiment 22 | 32.3 | 26.9 | 20.1 | 86.0 |

According to the test results of Embodiment 1 and Comparative examples 18-22, when the porosity (q) of the separator, the thickness (h) of the positive electrode material layer and the percentage mass content (m) of the compound represented by structural formula 1 in the non-aqueous electrolyte meet the preset condition of 0.1≤h/q*m≤15, they have similar functions, which can alleviate the problem of temperature rise of lithium-ion batteries, thus effectively improving the cycle life of lithium-ion batteries.

(4) Test results obtained from Embodiment 1 and Comparative examples 23-25 are shown in Table 6.

Table 6

| Embodiment /Comparative example | Maximum surface temperature of battery /Tmax | Minimum surface temperature of battery /$T_{min}$ | Temperature range difference of battery surface /% | Capacity retention rate after 800 cycles at 25°C, 1C/2C /% |
|---|---|---|---|---|
| Embodiment 1 | 31.3 | 26.4 | 18.6 | 87.3 |
| Embodiment 23 | 32.4 | 26.7 | 21.3 | 86.2 |
| Embodiment 24 | 34.6 | 27.7 | 24.9 | 84.3 |
| Embodiment 25 | 36.4 | 28.4 | 28.2 | 82.3 |
| Comparative example 10 | 43.8 | 31.7 | 38.2 | 72.2 |

According to the test results of Embodiment 1 and Comparative examples 23-25, when the negative electrode active materials are mixed with graphite and silicon oxide in different mass ratios, and the rational relationship of 0.1≤h/q*m≤15 proposed by the present application is met, the discharge temperature range of the battery can also be effectively reduced and the cycle capacity retention rate can be improved. This indicates that the system defined by the present application mainly improves the positive electrode of lithium ion, thus the relational definition is also applicable to different negative electrode materials and their combinations.

The above are merely the preferred embodiments of this application, and are not intended to limit the application. Any modification, equivalent substitution and improvement made within the spirit and principle of this application shall be included in the protection scope of this application.

## Claims

1. A lithium-ion battery, comprising a positive electrode, a negative electrode, a non-aqueous electrolyte and a separator, wherein the separator is positioned between the positive electrode and the negative electrode; the positive electrode comprises a positive electrode material layer containing a positive electrode active material, wherein the positive electrode active material comprises a lithium cobalt oxide, and the non-aqueous electrolyte comprises a non-aqueous organic solvent, a lithium salt and an additive, and the additive comprises a compound represented by structural formula 1:

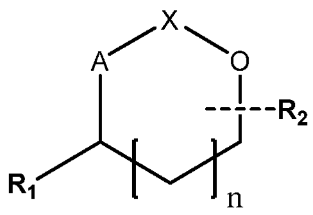

Structural formula 1

wherein n is 0 or 1, A is selected from C or O, X is selected from

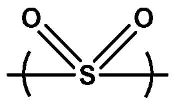 or 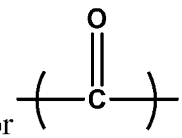,

$R_1$ and $R_2$ are independently selected from H,

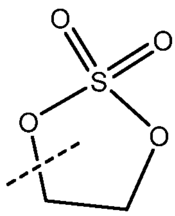, 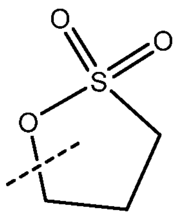, 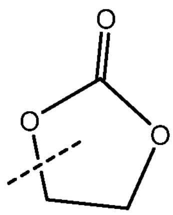,

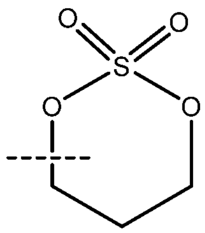 or 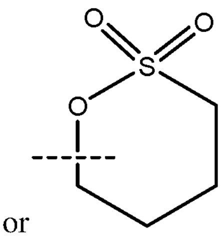,

$R_1$ and $R_2$ are not selected from H at the same time, and X, $R_1$ and $R_2$ contain at least one sulfur atom;
the lithium-ion battery meets the following requirements:

$$0.1 \leq h/q^*m \leq 15;$$

and $10 \leq q \leq 50$, $50 \leq h \leq 130$, $0.01 \leq m \leq 3$;

where q is a porosity of the separator, in %;
h is a thickness of the positive electrode material layer, in μm;
m is a percentage mass content of the compound represented by structural formula 1 in the non-aqueous electrolyte, in %;

the lithium-ion battery's maximum surface temperature ($T_{max}$) and minimum surface temperature ($T_{min}$) during 2C discharge to 100% DOD at 25°C meet the following requirements:

$$(T_{max}-T_{min})/T_{min}* 100\% \leq 30\%.$$

**2.** The lithium-ion battery of claim 1, wherein the lithium-ion battery meets the following requirements:

$$0.2 \leq h/q*m \leq 6.$$

**3.** The lithium-ion battery of claim 1, wherein the porosity (q) of the separator is 15%-30%.

**4.** The lithium-ion battery of claim 1, wherein the thickness (h) of the positive electrode material layer is 60 μm-110 μm.

**5.** The lithium-ion battery of claim 1, wherein the percentage mass content (m) of the compound represented by structural formula 1 in the non-aqueous electrolyte is 0.1%-1.0%.

**6.** The lithium-ion battery of claim 1, wherein the compound represented by structural formula 1 is selected from at least one of the following compounds:

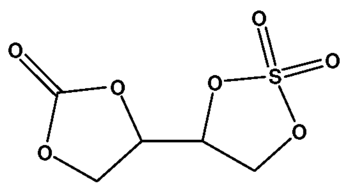

Compound 1

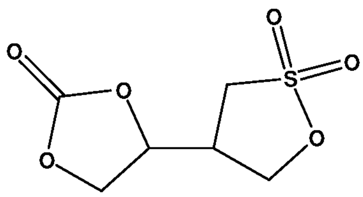

Compound 2

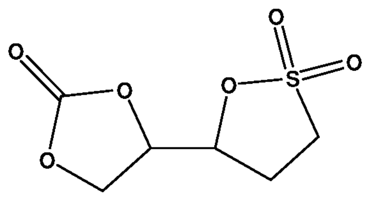

Compound 3

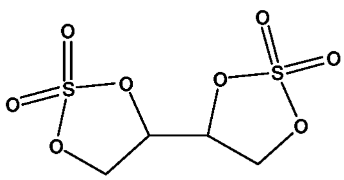

Compound 4

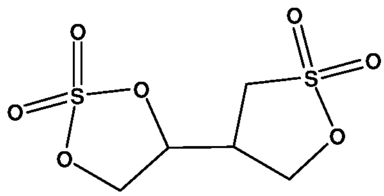

Compound 5

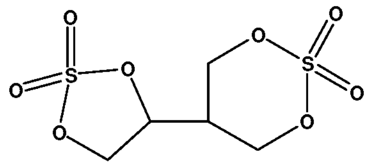

Compound 6

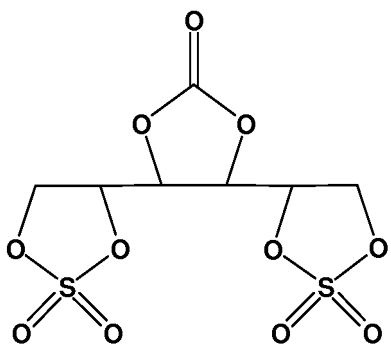

Compound 7

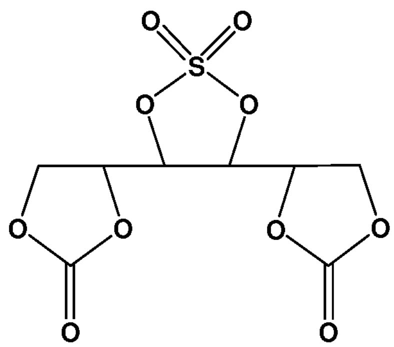

Compound 8

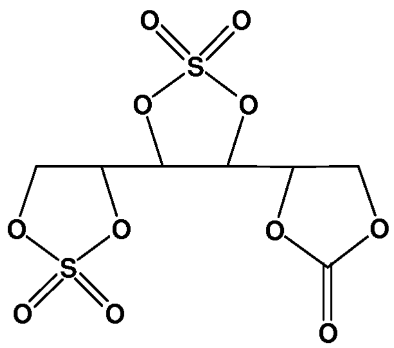

Compound 9

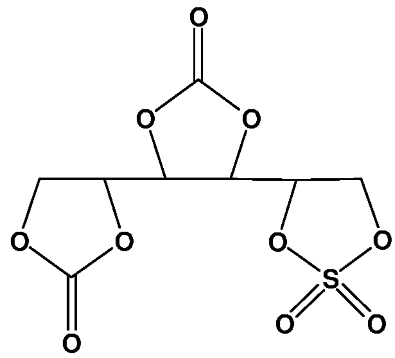

Compound 10

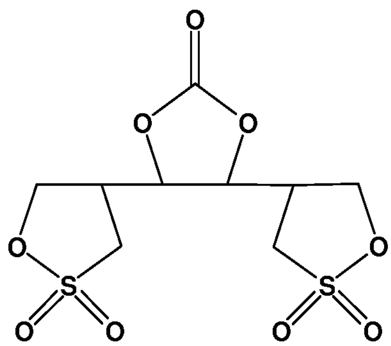

Compound 11

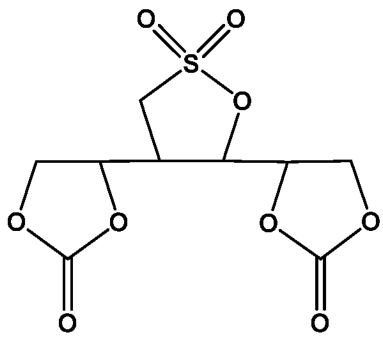

Compound 12

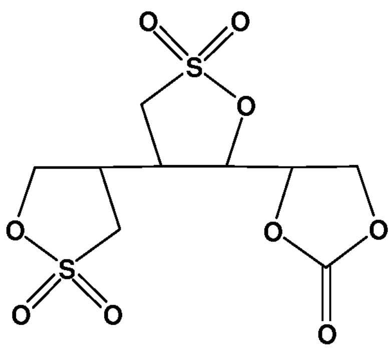

Compound 13

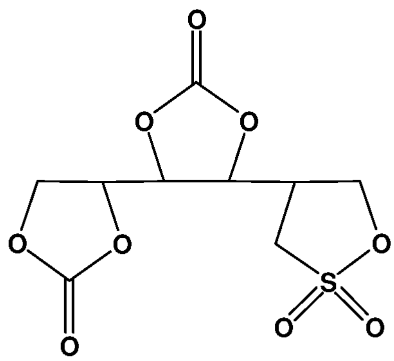

Compound 14

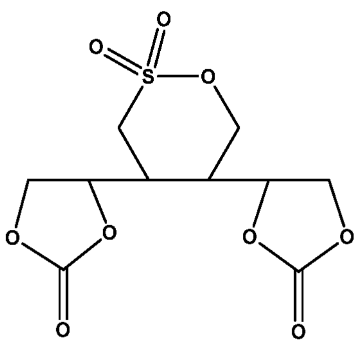

Compound 15

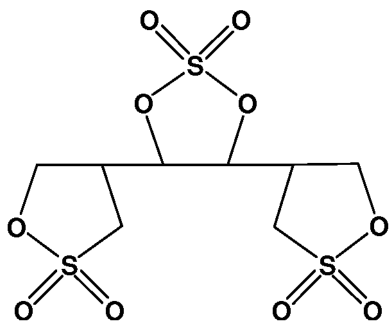

Compound 16

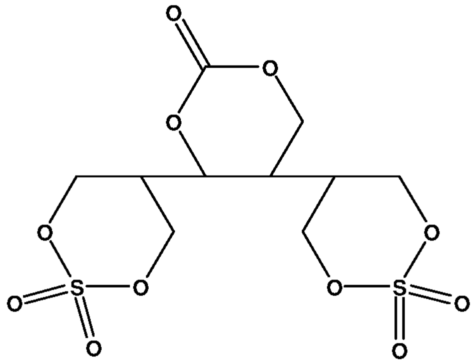

Compound 17

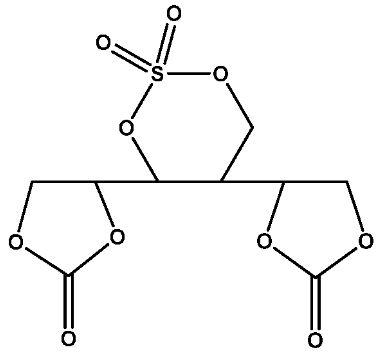

Compound 18

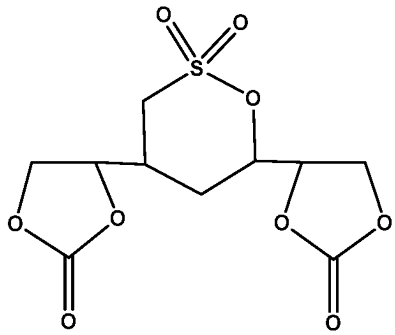

Compound 19

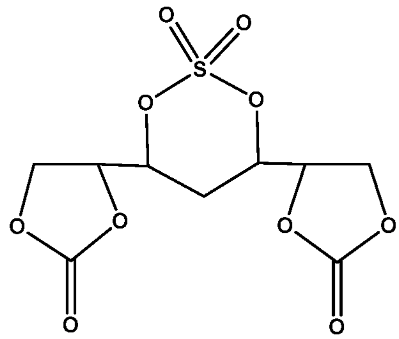

Compound 20

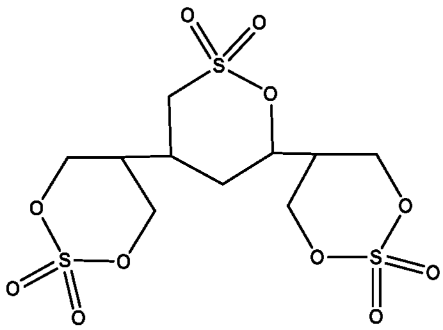

Compound 21

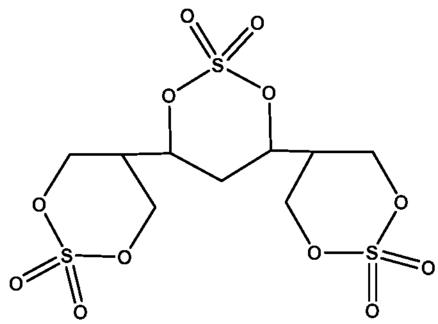

Compound 22.

**7.** The lithium-ion battery of claim 1, wherein a charging cut-off voltage of the lithium-ion battery is 4.4V to 4.7V.

**8.** The lithium-ion battery of claim 1, wherein the non-aqueous organic solvent comprises at least one selected from the group consisting of ethylene carbonate, dimethyl carbonate, diethyl carbonate, ethyl methyl carbonate, propene carbonate, butyl acetate, γ-butyrolactone, propyl propionate, ethyl propionate, ethyl butyrate, methyl acetate, ethyl acetate, ethyl fluoroacetate and fluoroether.

**9.** The lithium-ion battery of claim 1, wherein the additive further comprises at least one of cyclic sulfate compounds, sultone compounds, cyclic carbonate compounds, phosphate compounds, borate compounds and nitrile compounds;
an addition amount of the additive is 0.01%-30% based on the total mass of the non-aqueous electrolyte being 100%.

**10.** The lithium-ion battery of claim 9, wherein the cyclic sulfate compound is at least one selected from the group consisting of ethylene sulfate, propylene sulfate, methyl ethylene sulfate,

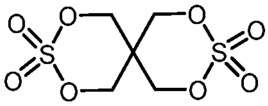 and 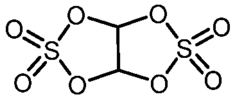 ;

the sultone compound is at least one selected from the group consisting of 1,3-propane sultone, 1,4-butane sultone and 1,3- propylene sultone;

the cyclic carbonate compound is at least one selected from the group consisting of vinylene carbonate, vinylethylene carbonate, methylene ethylene carbonate, fluoroethylene carbonate, trifluoromethyl ethylene carbonate, bis-fluoroethylene carbonate or a compound represented by structural formula 2;

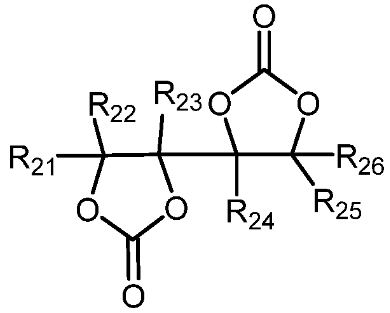

Structural formula 2

in structural formula 2, $R_{21}$, $R_{22}$, $R_{23}$, $R_{24}$, $R_{25}$ and $R_{26}$ are independently selected from one of a hydrogen atom, a halogen atom and a C1-C5 group;

the phosphate compound is at least one selected from the group consisting of tri (trimethylsilane) phosphate, tri (trimethylsilane) phosphite or a compound represented by structural formula 3:

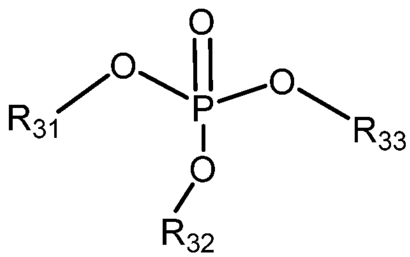

Structural formula 3

in structural formula 3, $R_{31}$, $R_{32}$ and $R_{33}$ are independently selected from a C1-C5 saturated hydrocarbon group, an unsaturated hydrocarbon group, a halogenated hydrocarbon group, - $Si(C_mH_{2m+1})_3$, m is a natural number of 1-3, and at least one of $R_{31}$, $R_{32}$ and $R_{33}$ is an unsaturated hydrocarbon group;

the borate compound is at least one selected from the group consisting of tris (trimethylsilane) borate and tris (triethyl silicane) borate; and

the nitrile compound is at least one selected from the group consisting of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

**INTERNATIONAL SEARCH REPORT**

International application No.
**PCT/CN2023/102471**

**A. CLASSIFICATION OF SUBJECT MATTER**

H01M10/0567(2010.01)i；H01M10/0525(2010.01)i

According to International Patent Classification (IPC) or to both national classification and IPC

**B. FIELDS SEARCHED**

Minimum documentation searched (classification system followed by classification symbols)

IPC：H01M10/-

Documentation searched other than minimum documentation to the extent that such documents are included in the fields searched

Electronic data base consulted during the international search (name of data base and, where practicable, search terms used)

CNTXT, DWPI, ENTXTC, CJFD, WFNPL, ISI Web of Science: 锂电池, 锂离子电池, 正极, 阳极, 负极, 阴极, 隔膜, 非水电解液, 钴酸锂, liCoO2, 添加剂, 孔隙率, lithium battery, lithium cell, li-ion battery, lithium-ion battery, spacer, electrolyte

**C. DOCUMENTS CONSIDERED TO BE RELEVANT**

| Category* | Citation of document, with indication, where appropriate, of the relevant passages | Relevant to claim No. |
|---|---|---|
| PX | CN 115020813 A (SHENZHEN CAPCHEM TECHNOLOGY CO., LTD.) 06 September 2022 (2022-09-06)<br>claims 1-10, description, paragraphs 4-14, and embodiments 1-25 | 1-16 |
| A | CN 112151855 A (NINGDE AMPEREX TECHNOLOGY LTD.) 29 December 2020 (2020-12-29)<br>description, paragraphs 6-65, 102-103, 121-208, and 228-242 | 1-16 |
| A | CN 114094109 A (SHENZHEN CAPCHEM TECHNOLOGY CO., LTD.) 25 February 2022 (2022-02-25)<br>description, paragraphs 17-88 | 1-16 |
| A | CN 110534825 A (CHINA ELECTRIC POWER RESEARCH INSTITUTE CO., LTD. et al.) 03 December 2019 (2019-12-03)<br>entire document | 1-16 |
| A | JP 2014194930 A (MITSUBISHI CHEMICAL CORP.) 09 October 2014 (2014-10-09)<br>entire document | 1-16 |
| A | US 2016218397 A1 (NEC CORP.) 28 July 2016 (2016-07-28)<br>entire document | 1-16 |

☐ Further documents are listed in the continuation of Box C.　☑ See patent family annex.

* Special categories of cited documents:
“A” document defining the general state of the art which is not considered to be of particular relevance
“D” document cited by the applicant in the international application
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **08 August 2023** | **21 August 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/102471**

| Patent document cited in search report | Publication date (day/month/year) | Patent family member(s) | Publication date (day/month/year) |
|---|---|---|---|
| CN 115020813 A | 06 September 2022 | None | |
| CN 112151855 A | 29 December 2020 | None | |
| CN 114094109 A | 25 February 2022 | None | |
| CN 110534825 A | 03 December 2019 | None | |
| JP 2014194930 A | 09 October 2014 | JP 2018142556 A | 13 September 2018 |
| | | JP 6624243 B2 | 25 December 2019 |
| | | JP 6364812 B2 | 01 August 2018 |
| US 2016218397 A1 | 28 July 2016 | WO 2015046531 A1 | 02 April 2015 |
| | | US 9742041 B2 | 22 August 2017 |
| | | JPWO 2015046531 A1 | 09 March 2017 |
| | | JP 6341209 B2 | 13 June 2018 |

Form PCT/ISA/210 (patent family annex) (July 2022)